# EUROPEAN PATENT APPLICATION

(11) **EP 1 386 882 A1**
(43) Date of publication of application: **04.02.2004**
(21) Application number: 02722892.3
(22) Date of filing: 30.04.2002
(51) Int. Cl.: C01B 3/32, C01B 3/40, B01J 23/46, B01J 23/89, H01M 8/06

(54) **HYDROGEN FORMATION APPARATUS**

(30) Priority: 07.05.2001 JP 2001136626; 12.06.2001 JP 2001176572; 09.07.2001 JP 2001207486
(71) Applicant: MATSUSHITA ELECTRIC INDUSTRIAL CO., LTD., Kadoma-shi, Osaka 571-8501 (JP)
(72) Inventor: MAENISHI, Akira, Toyonaka-shi, Osaka 565-0085 (JP); ASOU, Tomonori, Kitakatsuragi-gun, Nara 635-0831 (JP); MUKAI, Yuji, Kadoma-shi, Osaka 571-0070 (JP); OZEKI, Masataka, Izumi-shi, Osaka 594-0071 (JP); NAKAMURA, Akinari, Katano-shi, Osaka 576-0021 (JP); UKAI, Kunihiro, Ikoma-shi, Nara 630-0213 (JP); TAGUCHI, Kiyoshi, Osaka-shi, Osaka 538-0052 (JP); TOMIZAWA, Takeshi, Ikoma-shi, Nara 630-0123 (JP); FUJIWARA, Seiji, Osaka-shi, Osaka 532-0022 (JP)
(74) Representative: Grünecker, Kinkeldey, Stockmair & Schwanhäusser
(86) International application number: PCT/JP2002/004311
(87) International publication number: WO 2002/090249

(57) **Abstract**

A hydrogen generating part is provided for reacting water and a raw material composed of carbon and hydrogen atoms to generate hydrogen gas, a raw material supply part is provided for supplying a raw material to the hydrogen generating part, a water supply part is provided for supplying water to the hydrogen generating part, a catalyst combustion part is provided, an air supply part is provided for supplying air to the catalyst combustion part, a path switching part is provided for switching raw material supply paths between the raw material supply part and the hydrogen generating part, a bypass path is provided for supplying a raw material to the catalyst combustion part from the path switching part, and a combustion gas path is provided for supplying combustion gas after the catalyst combustion part to the hydrogen generating part. The control part switches the path switching part, and the inside of the hydrogen generating part is replaced with combustion gas after the catalyst combustion part.

## Description

### Technical Field

The present invention relates to a hydrogen generating device and so on for generating hydrogen gas by reforming hydrocarbon fuel.

### Background Art

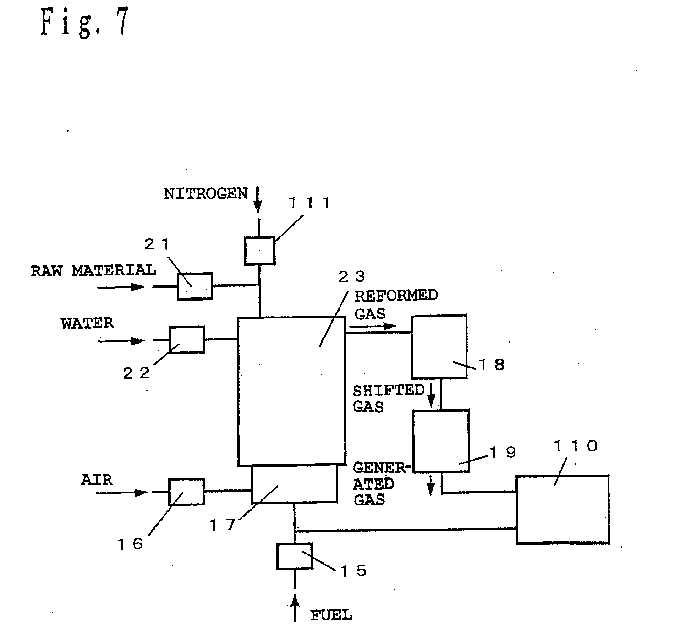

Referring to Figure 7, the following will discuss a method of stopping a fuel cell system equipped with a conventional hydrogen generating device.

Reference numeral 1 denotes a raw material supply part which supplies a raw material to be reformed, reference numeral 2 denotes a water supply part which supplies water required for reforming and is connected to a reformer 23 filled with a reforming catalyst. In the reformer 23, a burner 17 is provided which makes combustion by fuel supplied from a fuel supply part 15 and air supplied from an air supply part 16 to heat the reformer 23. Further, reformed gas from the reformer 23 is conveyed to a shifter 18 filledwith a shifting catalyst. Shifted gas from the shifter 18 is conveyed to a CO oxidation part 19 filled with a CO oxidation catalyst and is conveyed to a fuel cell 110 from the CO oxidation part 19 as hydrogen-rich generated gas being low in CO concentration. Off gas conveyed from the fuel cell 110 is mixed with fuel from the fuel supply part 15 and is supplied to the burner 17. Furthermore, a nitrogen supply part 11 is provided which supplies nitrogen during supply of a raw material from the raw material supply part 21 to the reformer 23.

Here, when an operation is stopped, while power generation in the fuel cell 110 is stopped, supply of a raw material from the raw material supply part 21 and supply of fuel from the fuel supply part 15 are stopped and nitrogen is supplied from the nitrogen supply part 11. Thus, combustible gas including a hydrocarbon material and hydrogen in the reformer 23, the shifter 18, the CO oxidation part 19, and the fuel cell 110 is pressed into the burner 17 and is burned therein. Further, supply of nitrogen continues after the burning. Hence, it is possible to lower a temperature in the hydrogen generating device which has increased in temperature, thereby stopping the fuel cell system with safety.

When means of supplying inert gas such as nitrogen gas is available, the operation can be stopped with safety as with the conventional art. However, when a hydrogen generating device is used in a place not supplied with inert gas, for example, when a fuel cell is placed for home use, another supply means such as a cylinder is necessary. If a nitrogen cylinder is placed for a fuel cell for home use , it is necessary to obtain an installation space, replace a vacant cylinder, and provide the cost of the replaced cylinder.

### Disclosure of the Invention

The present invention is devised to solve the above-described problems and has as its object the provision of a hydrogen generating device which can safely stop an operation without using inert gas.

A 1st invention of the present invention (corresponding to Claim 1) is a hydrogen generating device comprising a raw material supply part of supplying a raw material for generating hydrogen, a hydrogen generating part of generating generated gas by reacting the raw material and water, a water supply part of supplying water to the hydrogen generating part, a raw material supply path connecting the raw material supply part and the hydrogen generating part, a bypass path for the raw material supply path, a path switching part of switching the raw material supply path and the bypass path, a combustion part which is provided on the bypass path and burns the raw material, an air supply part of supplying air to the combustion part and/or the hydrogen generating part, a combustion gas path of supplying combustion gas of the combustion part to the hydrogen generating part, and a control part of operating the path switching part to replace the inside of the hydrogen generating part with combustion gas obtained from the combustion part.

A 2nd invention of the present invention (corresponding to Claim 2) is the hydrogen generating device according to the 1st invention, wherein the combustion part has catalytic combustion.

A 3rd invention of the present invention (corresponding to Claim 39 is the hydrogen generating device according to the 1st or the 2nd invention, wherein when the hydrogen generating device is started, the control part controls in such manner that a raw material is supplied to the combustion part the combustion part operates, the raw material burns, the combustion gas is supplied to the hydrogen generating device, and the inside of the hydrogen generating part is replaced with the combustion gas, and then, the control part operates the path switching part to start supply of a raw material to the hydrogen generating part.

A 4th invention of the present invention (corresponding to Claim 4) is the hydrogen generating device according to the 3rd invention, wherein the device further comprises oxygen concentration detecting means of detecting a concentration of oxygen in gas outputted from the hydrogen generating part, and the control part operates the path switching part to start supply of raw material to the hydrogen generating part when a concentration detected by the oxygen concentration detecting means is equal to or smaller than a set value.

A 5th invention of the present invention (corresponding to Claim 5) is the hydrogen generating device according to the 3rd invention, wherein the device further comprises temperature detecting means of detecting a temperature of gas outputted from the hydrogen generating device, and the control part operates the path switching part to start supply of raw material to the hydrogen generating part when a temperature detected by the temperature detecting means is equal to or larger than a set value.

A 6th invention of the present invention (corresponding to Claim 6) is the hydrogen generating device according to the 1st or the 2nd invention, wherein when the hydrogen generating device is stopped, the control part operates the path switching part to supply a raw material to the combustion part, operates the combustion part to burn the raw material, supplies combustion gas to the hydrogen generating part, and replaces the inside of the hydrogen generating part with the combustion gas.

A 7th invention of the present invention (corresponding to Claim 7) is the hydrogen generating device according to the 6th invention, wherein the device further comprises oxygen concentration detecting means of detecting a concentration of oxygen in gas outputted from the hydrogen generating part, and the control part stops supply of rawmaterial when a concentration detected by the oxygen concentration detecting means is equal to or larger than a set value.

An 8th invention of the present invention (corresponding to Claim 8) is the hydrogen generating device according to the 7th invention, wherein after supply of the raw material is stopped, air is supplied from the air supply part.

A 9th invention of the present invention (corresponding to Claim 9) is the hydrogen generating device according to the 1st or the 2nd invention, wherein during combustion, the combustion part is supplied with an amount of air substantially 1 to 1.3 times as large as a required amount for complete combustion of a raw material.

A 10th invention of the present invention (corresponding to Claim 10) is the hydrogen generating device according to the 1st or the 2nd invention, wherein the hydrogen generating part includes at least a reformer of reacting a raw material and water and a burner of supplying heat to the reformer by combustion, and replaced gas in the hydrogen generating part is burned by the burner to generate heat.

An 11th invention of the present invention (corresponding to Claim 11) is the hydrogen generating device according to any one of the 3rd to the 5th inventions, wherein the hydrogen generating part includes at least a reformer of reacting a raw material and water and a burner of supplying heat to the reformer, and the reformer is heated by the burner in addition to heat of combustion gas from the catalyst combustion part.

A 12th invention of the present invention (corresponding to Claim 12) is the hydrogen generating device according to any one of the 1st to the 11th inventions, wherein the hydrogen generatingpart includes a shifter, and a shifting catalyst filled in the shifter contains at least one of platinum, ruthenium, rhodium, and palladium.

A 13th invention of the present invention (corresponding to Claim 13) is a hydrogen generating device, wherein the device comprises a raw material supply part of supplying a hydrocarbon raw material, a water supply part of supplying water, a reformer filled with a reforming catalyst, a burner of heating the reformer, a fuel supply part of supplying combustible fuel to the burner, an air supply part of supplying combustion air to the burner, a shifter which has reformed gas flowing from the reformer and has a shifting catalyst therein, a CO oxidation part which has shifted gas flowing from the shifter and has a CO oxidation catalyst therein, and at least one of a shifting air supply part of supplying air to the shifter and a CO oxidation air supply part of supplying air for CO oxidation to the CO oxidation part, and

when an operation is stopped, supply of a raw material from the raw material supply part and supply of fuel from the fuel supply part are stopped, water from the water supply part is supplied, and at least one of air from the shifting air supply part or air from the CO oxidation air supply part is supplied.

A 14th invention of the present invention (corresponding to Claim 14) is the hydrogen generating device according to the 13th invention, wherein when an operation is stopped, the supply is stopped while fuel from the fuel supply part is gradually reduced or a raw material from the raw material supply part is gradually reduced.

A 15th invention of the present invention (corresponding to Claim 15) is the hydrogen generating device according to the 13th or the 14th invention, wherein the device further comprises a fuel cell of supplying generated gas from the CO oxidation part, and generated gas supplied to the fuel cell at the stop of an operation is mixed with fuel from the fuel supply part and is supplied to the burner.

A 16th invention of the present invention (corresponding to Claim 16) is the hydrogen generating device according to any one of the 13th to the 15th inventions, wherein the device comprises a cooling air supply part of supplying cooling air to the reformer, and a temperature detecting part of detecting a temperature of the reforming catalyst, and
when an operation is stopped, in the case where a temperature of the reforming catalyst is below a predetermined value, supply of water from the water supply part is stopped and air is supplied from the cooling air supply part.

A 17th invention of the present invention (corresponding to Claim 17) is the hydrogen generating device according to any one of the 13th to the 16th inventions, wherein the device further comprises a flame detecting part of detecting the presence of flame of the burner, and after an operation is stopped, when a combustion detecting part judges that flame is extinguished, an amount of air from the air supply part is increased.

An 18th invention of the present invention (corresponding to Claim 18) is the hydrogen generating device according to any one of the 13th to the 17th inventions, wherein the device further comprises a flame detecting part of detecting the presence of flame of the burner, and after an operation is stopped, when a combustion detecting part judges that flame is extinguished and a fixed time period elapses from the stop of the operation, at least one of the shifting air supply part and the CO oxidation air supply part is increased in air amount.

A 19th invention of the present invention (corresponding to Claim 19) is the hydrogen generating device according to the 15th invention, wherein when a predetermined time period elapses after the raw material from the raw material supply part is stopped, fuel from the fuel supply part is stopped.

A 20th invention of the present invention (corresponding to Claim 20) is the hydrogen generating device according to the 15th invention, wherein the device further comprises a temperature detecting part of detecting a temperature of the reformer, and fuel from the fuel supply part is controlled so as to set a value of the temperature detecting part at a predetermined temperature.

A 21st invention of the present invention (corresponding to Claim 21) is the hydrogen generating device according to the 15th invention, wherein an amount of air supplied to the burner from the air supply part is controlled according to an amount of water supplied from the water supply part.

A 22nd invention of the present invention (corresponding to Claim 22) is the hydrogen generating device according to any one of the 13th to the 21st inventions, wherein the CO oxidation part further comprises a heater of heating the CO oxidation catalyst and the heater increases a temperature of the CO oxidation part when an operation is stopped.

A 23rd invention of the present invention (corresponding to Claim 23) is the hydrogen generating device according to any one of the 13th to the 21st inventions, wherein the device further comprises a heater of heating the shifting catalyst of the shifter and the heater increases a temperature of the shifter when an operation is stopped.

A 24th invention of the present invention (corresponding to Claim 24) is the hydrogen generating device according to any one of the 13th to the 23rd inventions, wherein the shifting catalyst contains at least one of platinum, ruthenium, rhodium, and palladium.

### Brief Description of the Drawings

Figure 1 is a structural diagram showing a hydrogen generating device according to Embodiment 1 of the present invention;
Figure 2 is a structural diagram showing a hydrogen generating device according to Embodiment 2 of the present invention;
Figure 3 is a structural diagram showing a hydrogen generating device according to Embodiment 3 of the present invention;
Figure 4 is a structural diagram showing a hydrogen generating device according to Embodiment 4 of the present invention;
Figure 5 is a structural diagram showing a hydrogen generating device according to Embodiment 5 of the present invention;
Figure 6 is a structural diagram showing a hydrogen generating device according to Embodiment 6 of the present invention; and
Figure 7 is a structural diagram showing a conventional hydrogen generating device.

### Description of Symbols

- 1: Hydrogen generating part
- 2: raw material supply part
- 3: Raw material supply path
- 4: Path switching part
- 5: Water supply part
- 6: Catalyst combustion part
- 7: Raw material bypass path
- 8: Control part
- 9: Air supply part
- 10: Combustion gas path
- 11: Gas exit path
- 12: Oxygen concentration detecting means
- 13: Temperature detecting means
- 15: Fuel supply part
- 16: Air supply part
- 17: Burner
- 18: Shifter
- 19: CO oxidation part
- 21: Raw material supply part
- 22: Water supply part
- 23: Reformer
- 31: Control part
- 32: Heater A
- 33: Heater B
- 110: Fuel cell
- 111: Nitrogen supply part
- 112: CO oxidation air supply part
- 113: Cooling air supply part
- 114: Temperature detecting part
- 115: Switching valve
- 116: Flame detecting part
- 117: Shifting air supply part

### Best Mode for Carrying Out the Invention

Embodiments of the present invention will be discussed below in accordance with the accompanied drawings.

### (Embodiment 1)

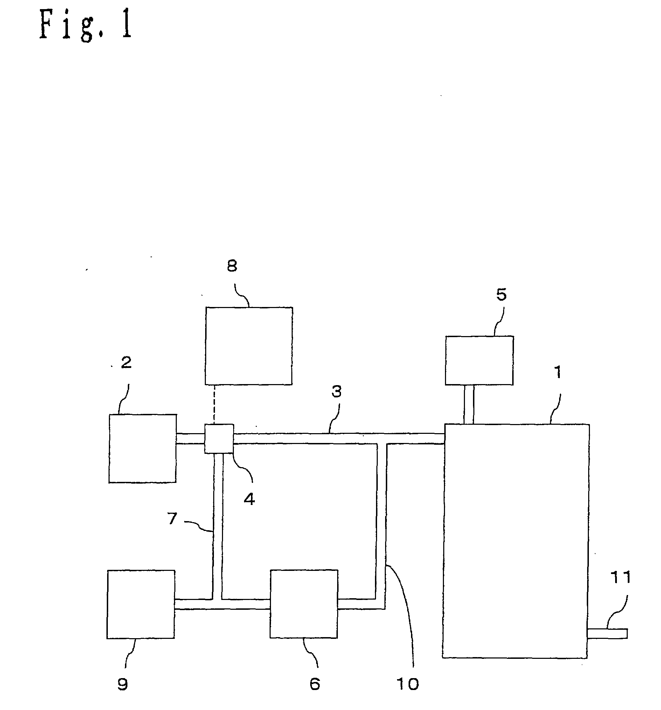

Figure 1 is a structural diagram showing a hydrogen generating device according to Embodiment 1 of the present invention. In Figure 1, reference numeral 1 denotes a hydrogen generating part which generates hydrogen gas from water and a raw material including a hydrocarbon component of natural gas and LPG, alcohol such as methanol, and a naphtha component.

The hydrogen generating part 1 is constituted by a reformer which reacts a raw material and water by using a reforming catalyst at a high temperature, a shifter which performs shift reaction on carbon monoxide and water in gas after the reformer by using a shifting catalyst, reaction parts of a carbon monoxide purifying part which oxidizes and reduces carbon monoxide in gas after the shifter gas by using an oxidation catalyst, a heating part of heating the reformer, and actuators of operating the reaction parts. A burner of diffusion type is used as the heating part.

Reference numeral 2 denotes a raw material supply part of supplying a raw material. A booster is used as an actuator of supplying a raw material of gas, and a liquid pump is used for supplying a liquid raw material. Therawmaterial is supplied to the reformer of the hydrogen generating part 1 through a raw material supply path 3. Further, a path switching part 4 is provided on the raw material supply path 3.

Reference numeral 5 denotes a water supply part which supplies water to the reformer of the hydrogen generating part 1 by using a water pump. Reference numeral 6 denotes a catalyst combustion part which burns a raw material including a carbon monoxide component of natural gas and LPG, alcohol such as methanol, and a naphtha component. The catalyst combustion part 6 has a combustion catalyst which is mainly composed of Pt and is prepared while being carried on a cordierite honeycomb in order to oxidize a raw material for combustion.

Reference numeral 7 denotes a raw material bypass path which is connected to the path switching part 4 and supplies a raw material to the catalyst combustion part 6. Reference numeral 8 denotes a control part of controlling an operation of the path switching part 4. Reference numeral 9 denotes an air supply part of supplying air for oxidizing a rawmaterial to the catalyst combustion part 6, and an air fan of Sirocco type is used as the air supply part.

Reference numeral 10 denotes a combustion gas path of supplying combustion gas after the catalyst combustion part 6 to the hydrogen generating part 1. In the present embodiment, the combustion gas path is connected to the raw material supply path 3. Reference numeral 11 denotes a gas exit path of hydrogen gas generated in the hydrogen generating part 1. Hydrogen gas is supplied to a device requiring hydrogen gas, for example, a fuel cell power generating device through this gas exit path 11.

Besides, a solenoidvalve is used as the path switching part 4, and an amount of a raw material supplied to the hydrogen generating part 1 and the catalyst combustion part 6 can be adjusted according to an opening degree of the valve. Further, adjustment of an opening degree of the solenoid valve is controlled by a signal from the control part 8.

Hereinafter, the following will discuss operations in a steady state, at the start of the device, and at the stop of the device.

First, the steady-state operation will be described. During the steady-state operation, a raw material and water are supplied to the hydrogen generating part 1 from the raw material supply part 2 and the water supply part 5 and hydrogen gas is generated in the reformer, the shifter, and the carbon monoxide purifying part. When an amount of generated hydrogen gas is changed, amounts of the raw material and water are changed accordingly. The reformer is operated at around 700°C, the shifter is operated at around 300°C, and the carbon monoxide purifying part is operated at around 150°C to develop reaction on catalysts.

Fundamentally, during the steady-state operation, the path switching part 4 supplies a raw material only to the hydrogen generating part 1 from the raw material supply part 2 in response to a signal from the control part 8.

Next, the operation at the start of the device will be discussed. First, thepath switchingpart 4 is operated in response to a signal from the control part 8, and a raw material is supplied only to the catalyst combustion part 6 from the raw material bypass path 7. At this point, air for burning a raw material is supplied to the catalyst combustion part 6 from the air supply part 9. In the catalyst combustion part 6, its combustion catalyst is operated to burn the raw material. Combustion gas after the catalyst combustion part 6 is supplied to the hydrogen generating part 1 from the combustion gas path 10 through the raw material supply path 3.

With this operation, gas in the hydrogen generating part 1 is replaced with the combustion gas. Since time for replacement can be estimated based on a capacity of the hydrogen generating part 1, it is possible to previously set replacement time of combustion gas. After the end of replacement time, the path switching part 4 is controlled by the control part 8, supply of a raw material from the rawmaterial supplypart 2 to the hydrogen generating part 1 is started, and the hydrogen generating part 1 is operated to start generation of hydrogen gas.

Replacement with combustion gas is performed in the device of the present embodiment at the start of the device for the following reason:

Since the hydrogen generating part 1 is normally operated at a high temperature, after the operation is stopped and the device is cooled, a volume of gas decreases in the device because of a lowering temperature. Hence, air is more likely to enter the device. If a raw material is supplied to the hydrogen generating part 1 while air is mixed, the raw material may enter a combustible range in the hydrogen generating part 1.

For this reason, in the present embodiment, gas in the device is replacedwith combustion gas of a rawmaterial after the catalyst combustion part 6 at the start of the device. The combustion gas contains, as main components, nitrogen, carbon dioxide, water vapor, and remaining oxygen which has not been consumed by combustion.

Since the amount of remaining oxygen can be adjusted according to an amount of air, combustion gas can be used as inert gas for preventing burning of raw material gas. Considering that the amount of remaining oxygen is set at 0, it is desirable that an amount of supplied air be close to a theoretical oxygen amount for completely burning a raw material.

However, considering a concentration of oxygen within a combustion range of a kind of raw material gas, it is not always necessary to set an amount of remaining oxygen at 0. For example, as to hydrogen with high flammability and acetylene which is one of the materials having highest flammability, when a concentration of oxygen in inert gas is set at about 6.3% or less, the concentration falls out of a combustion range at room temperature and atmospheric pressure. If it is assumed that nitrogen and carbon dioxide in combustion gas are used as inert gas, in the case of hydrogen, an amount of air supply for setting a concentration of oxygen in combustion gas out of the combustion range is 1.3 times or smaller than an amount of air which is a theoretical amount of oxygen for completely burning a raw material. In the case of acetylene, such an amount of air supply is 1.4 times or smaller.

Hence, the present embodiment is characterized in that air is supplied to the catalyst combustion part 6 while an upper limit of air supply is set at 1.3 times as large as an amount of air which is the theoretical amount of oxygen for completely burning a raw material, thereby preventing a raw material from entering a combustible range in the hydrogen generating part 1.

Additionally, when an amount of air supply is smaller than the theoretical amount of oxygen for completely burning a raw material, a large amount of carbon monoxide is contained in combustion gas. Hence, it is not desirable to set an amount of air supply at the theoretical amount of oxygen or less.

Subsequently, the operation at the stop of the device will be discussed. The path switching part 4 is operated in response to a signal from the control part 8, and a raw material is supplied to the catalyst combustion part 6 from the raw material supply part 2 via the raw material bypass path 7. At this point, air for burning a raw material is supplied to the catalyst combustion part 6 from the air supply part 9.

In the catalyst combustion part 6, its combustion catalyst is operated to burn a raw material. Combustion gas after the catalyst combustion part 6 is supplied to the hydrogen generating part 1 from the combustion gas path 10 through the raw material supply path 3. With this operation, gas in the hydrogen generating part 1 is replaced with combustion gas. Since time required for replacement can be estimated based on a capacity of the hydrogen generating part 1, replacement time of combustion gas can be set in advance. After the end of replacement time, supply of a raw material to the catalyst combustion part 6 is stopped and the operation of the hydrogen generating device is completed.

Replacement with combustion gas is performed in the device at the stop of the device in the present invention for the following reason:

Since the hydrogen generating part 1 is normally operated at a high temperature, after the operation is stopped and the device is cooled, a volume of gas decreases in the device because of a lowering temperature. Hence, air is more likely to enter the device. As a result, hydrogen remaining in the hydrogen generating part 1 may enter a combustible range.

As described above, in the present embodiment, when the device is stopped, gas in the device is replaced with combustion gas of a raw material after the catalyst combustion part 6, and then, the operation of the hydrogen generating device is completed.

Replacement with combustion gas is performed in the above-described manner, thereby preventing hydrogen remaining in the hydrogen generating part 1 from entering the combustible range as when the device is started.

Next, the following will discuss an example of an operation of generating hydrogen using methane gas, which is a main component of natural gas.

At the start of the device, methane gas is firstly supplied to the catalyst combustion part 6. At the same time, air is supplied from the air supply part 9 with an amount 1.3 times as large as an amount of air required for complete combustion. The gas is supplied to the hydrogen generating part 1 and replacement is performed in the device.

After the replacement time, the path is switched, the hydrogen generating part 1 is operated, and methane gas and water are supplied to start generation of hydrogen. At this point, a concentration of oxygen in combustion exhaust gas after the catalyst combustion part 6 is about 5.3% on a basis of dry gas. Hence, it was confirmed that even when raw material gas is supplied to the hydrogen generating part 1, methane used as raw material gas in the device falls out of the combustible range.

At the stop of the device, the path switching part 4 is operated, and methane gas supplied to the hydrogen generating part 1 is supplied to the catalyst combustion part 6. At this point, air is simultaneously supplied from the air supply part 9 with an amount 1.3 times as large as an amount of air required for complete combustion. Immediately before the operation, gas at the exit of the hydrogen generating part 1 is composed of hydrogen of about 80% and carbon dioxide of about 20% on a basis of dry gas. Since a concentration of remaining oxygen in combustion gas is about 5.3% after the catalyst combustion part 6, it was confirmed that hydrogen falls out of the combustible range even immediately after combustion gas is supplied, which is the time when the concentration of hydrogen is the highest.

Besides, because of a high concentration of hydrogen, it is not desirable that gas replaced immediately after supply of combustion gas be exhausted as it is. Therefore, in this operation, the gas is supplied to the heating part of the hydrogen generating part 1 and is burned in the heating part.

Further, in this operation, after replacement of combustion gas is performed in the hydrogen generating part 1 at the stop of the device, the inside of the hydrogen generating part 1 is further replaced with air. The combustion gas contains a water vapor component because of combustion of a raw material. When the combustion gas is contained in the device, water condenses in the device. This is because the condensingwater needs to be evaporated at the start of the device and delay may occur in the operating time.

As a method of supplying air, air for combustion is supplied even after the stop of supply of a raw material to the catalyst combustion part 6. Additionally, when air is directly supplied to the hydrogen generating part 1, the inside of the hydrogen generating part can be replaced with air.

Additionally, usage of the catalyst combustion part 6 as means of generating inert gas is also one of the characteristics of the present embodiment.

Catalytic combustion method is superior in complete combustion of a raw material as compared with flame combustion method. Thus, correlation improves between a concentration of remaining oxygen in combustion gas and an amount of supplied air for combustion, thereby readily managing a concentration of remaining oxygen. Moreover, in the flame combustion method, when combustion is made with an air amount 1 to 1.3 times as large as an amount of air which is the theoretical amount of oxygen for completely burning a raw material, incomplete combustion occurs and combustion gas contains a large amount of carbon monoxide in some conditions. Further, since a flame body has a high temperature, combustion gas contains nitrogen oxide. These components serve as a poisoning component of a fuel cell power generating device, which is a destination of supplied hydrogen gas, or a corrosive component of the constituent elements of the device. In the catalytic combustion method, these components can be nearly eliminated in combustion exhaust gas. Further, another characteristic is a simple configuration of the device because space for forming flame is not necessary.

However, the combustion part of the present invention is not limited to the catalytic combustion method. The flame combustion method is also applicable.

Moreover, when a shifting catalyst containing copper zinc as its component is used as a catalyst of the shifter of the hydrogen generating part 1, since characteristics are likely to deteriorate due to oxidation on the catalyst, it is desirable that an amount of air supplied to the catalyst combustion part 6 be close to an amount of air which is the theoretical amount of oxygen for completely burning a raw material as much as possible. When a shifting catalyst of noble metal is used, deterioration due to oxidation on the catalyst is less likely to occur. Hence, any problems do not arise when the amount of air is 1 to 1.3 times as large as the theoretical amount of oxygen for completely burning a raw material. Additionally, as the shifting catalyst of noble metal, it is desirable to contain at least one of platinum, ruthenium, rhodium, and palladium.

### (Embodiment 2)

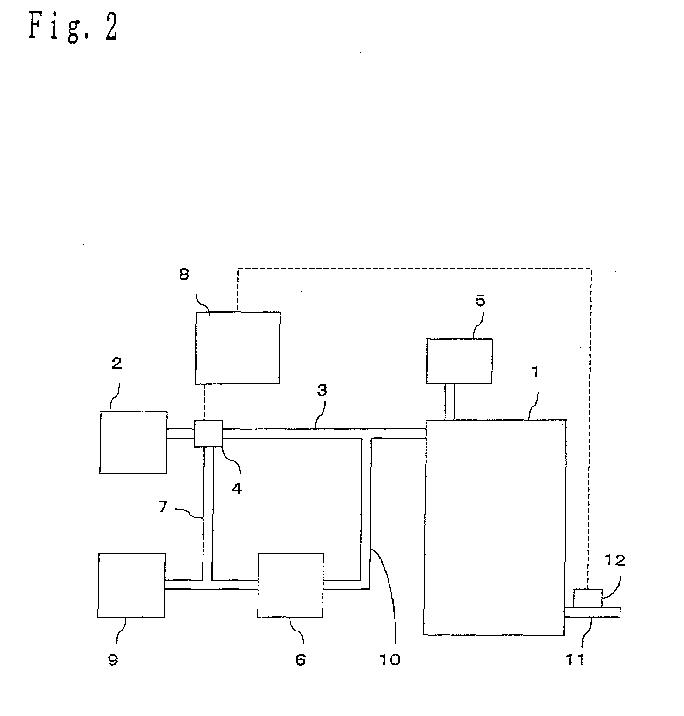

Figure 2 is a longitudinal sectional view showing main parts of a hydrogen generating device according to an embodiment of the present invention. The configuration is almost identical to that of Embodiment 1 shown in Figure 1. The description of the same parts is omitted and only differences will be discussed.

The difference is the provision of oxygen detecting means 12 on a gas exit path 11 of a hydrogen generating part 1. The oxygen detecting means 12 measures a concentration of oxygen in hydrogen gas after the hydrogen generating part 1. A sensor of diaphragm galvanic cell type is used as the oxygen detecting part 12. Further, a control part 8 can control a path switching part 4 according to a concentration of oxygen detected by the oxygen detecting means 12.

At a steady-state operation, the start of the device, and the stop of the device, almost the same operations are performed as in Embodiment 1. The difference is that replacement of combustion gas from a catalyst combustion part 6 at the start and the stop of the device is performed according to a concentration of oxygen detected by the oxygen detecting means 12.

Differences in operations will be discussed in detail. At the start of the device, because of the replacement of combustion gas from the catalyst combustion part 6, a concentration of detected oxygen is reduced in the oxygen detecting means 12. Hence, since a guide concentration of oxygen for preventing burning of raw material gas is 6.3%, replacement of combustion gas is performed such that a concentration of detected oxygen is below 6.3% in the oxygen detecting means 12, and the path switching part 4 is controlled by the control part 8.

Moreover, when the device is stopped, a concentration of detected oxygen increases in the oxygen detectingmeans 12 because of replacement of combustion gas from the catalyst combustion part 6. Since a concentration of oxygen in combustion gas can be estimated based on amounts of a raw material and air that are supplied to the catalyst combustion part 6, replacement of combustion gas is performed while using the concentration as a guide, and the path switching part 4 is controlled by the control part 8.

Replacement of combustion gas by the catalyst combustion part 6 is controlled at the start and the stop according to a concentration of oxygen detected by the oxygen detecting means 12. Thus, it is possible to more positively manage a concentration of oxygen in the device.

For example, when a different kind of raw material is supplied to the catalyst combustion part 6 by mistake, in the case of a constant amount of supplied air, a concentration of oxygen detected by the oxygen detecting means 12 is different from the assumed value. In this case, an amount of air supplied to the catalyst combustion part 6 is controlled according to the concentration of oxygen detected by the oxygen detecting means 12, so that a concentration of oxygen in combustion gas can be controlled to a proper value. Moreover, at the start of the device, when just a small amount of air enters the device, a concentration of oxygen detected by the oxygen detecting means 12 can be reduced more quickly, thereby shortening replacement time as compared with the case where replacement time is set in advance.

Additionally, when replacement of combustion gas from the catalyst combustion part 6 at the stop of the device is controlled according to a concentration of oxygen detected by the oxygen detecting means 12, it is necessary to supply to the catalyst combustion part air with a larger amount than an amount of air which is the theoretical amount of oxygen for completely burning a raw material.

### (Embodiment 3)

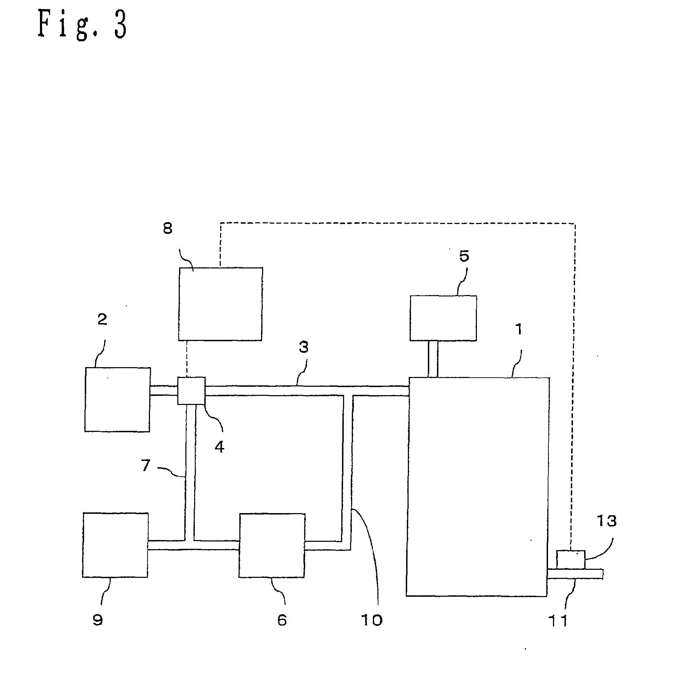

Figure 3 is a longitudinal sectional view showing main parts of a hydrogen generating device according to an embodiment of the present invention. The configuration is almost identical to that of Embodiment 1 shown in Figure 1. The description of the same parts is omitted and only differences will be discussed. The difference is the provision of temperature detecting means 13 on a gas exit path 11 of a hydrogen generating part 1. The temperature detecting means 13 detects a temperature of gas after the hydrogen generating part 1.

At a steady-state operation, the start of the device, and the stop of the device, almost the same operations are performed as in Embodiment 1. The difference is that replacement of combustion gas from a catalyst combustion part 6 at the start of the device is controlled according to a gas temperature measured by the temperature detecting means 13 and a path switching part 4 is controlled by the control part 8.

Differences in operations will be discussed in detail. When the device is started, combustion gas is supplied to the hydrogen generating part 1 from the catalyst combustion part 6, and the inside of the hydrogen generating part 1 is replaced with combustion gas. Combustion gas generated by burning a raw material in the catalyst combustion part 6 is relatively high in temperature although the temperature varies depending upon operating conditions. When such combustion gas is supplied to the hydrogen generating part 1, the hydrogen generating part 1 is heated. In the heating state, a temperature of gas from the hydrogen generating part 1 is measured by the temperature detecting means 13. When the measured temperature exceeds a set value, the path switching part 4 is controlled by the control part 8 to start supply of a raw material to the hydrogen generating part 1.

In the hydrogen generating part 1, a reformer is operated at around 700°C, a shifter is operated at around 300°C, and a carbon monoxide purifying part is operated at around 150°C to generate hydrogen gas. Therefore, it is necessary to heat the reaction parts at the start of the device. In general, the following method is used: the reformer is heated by a heating part which supplies heat required for reaction, and the shifter and the carbon monoxide purifying part are heated successively by the heat. In this method, when inert gas at room temperature is supplied to the hydrogen generating part 1 from a cylinder and so on until the reaction parts reach an operating temperature, quite a large amount of inert gas is necessary. Moreover, when a raw material is supplied to the hydrogen generating part 1 until the reaction parts reach the operating temperature, the configuration of processing a raw material is necessary.

Thus, in the configuration of the present embodiment, combustion gas generated by burning a raw material in the catalyst combustion part 6 is used, gas in the hydrogen generating part 1 is replaced with combustion gas at the start of the device, and the reaction parts of the hydrogen generating part 1 are heated.

Further, in order to recognize the heating state, a temperature of gas from the hydrogen generating part 1 is measured by the temperature detecting means 13 and supply of a raw material to the hydrogen generating part 1 is started according to the temperature. Hence, it is possible to readily replace inert gas and preheat the hydrogen generating part 1.

Next, the following will discuss an example of an operation of generating hydrogen by using methane gas, which is a main component of natural gas, in the device according to the present embodiment.

At the start of the device, methane gas is firstly supplied to the catalyst combustion part 6. At the same time, air is supplied from an air supply part 9 with an amount 1.3 times as large as an amount of air required for complete combustion. At this point, combustion gas is about 800°C after the catalyst combustion part 6. The gas is supplied to the hydrogen generating part 1, and the reformer, the shifter, and the carbon monoxide purifying part are heated in order by potential heat of combustion gas. For example, the heating part generates heat by burning the combustion gas. Since the operating temperature of a carbon monoxide purifying catalyst is set at about 150°C, combustion gas is supplied from the catalyst combustion part 6 until a temperature measured by the temperature detecting means 13 reaches 150°C. Thereafter, the path switching part 4 is controlled by the control part 8 and supply of methane gas to the hydrogen generating part 1 is started. As compared with a conventional method in which nitrogen gas is supplied and heating is sequentially performed using heat from the reformer, the time until a temperature measured by the temperature detecting means 13 reaches 150°C can be shortened to about two thirds.

Additionally, when combustion gas after the catalyst combustion part 6 is supplied, the heating part of the hydrogen generating part 1 is also operated, and operations are performed to heat the hydrogen generating part 1 by using potential heat of combustion gas and heat from the heating part. These operations can further shorten the time until a temperature measured by the temperature detecting means 13 reaches 150°C.

The following will discuss another embodiment of the present invention in accordance with the accompanied drawings.

### (Embodiment 4)

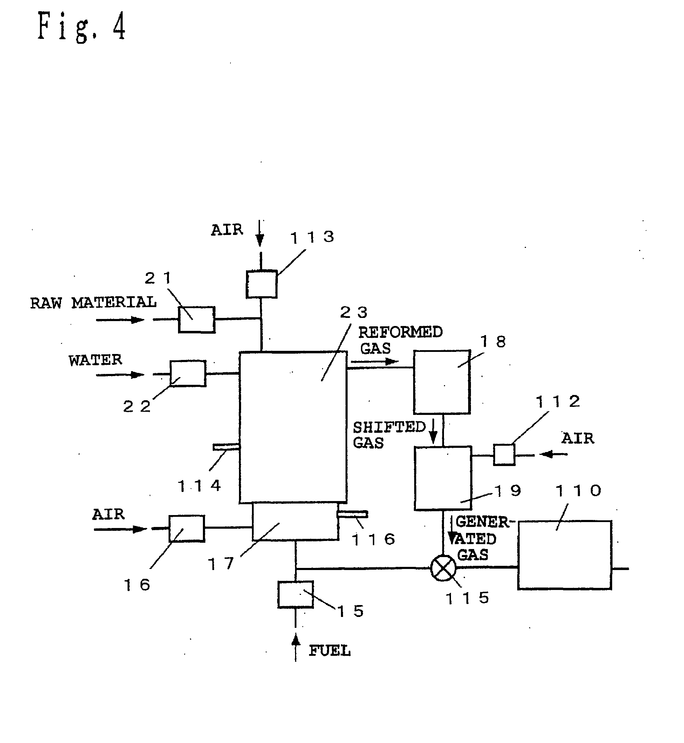

Figure 4 is a structural diagram showing a hydrogen generating device according to Embodiment 4 of the present invention. In Figure 4, reference numeral 1 denotes a raw material supply part of supplying a raw material to be subjected to reforming reaction, reference numeral 2 denotes a water supply part which supplies water required for reforming reaction and is connected to a reformer 23 filled with a reforming catalyst containing Ru as a main component, and a burner 17 is provided on the reformer 23. The burner 17 makes combustion by using fuel supplied from a fuel supply part 15 and air supplied from an air supply part 16 to heat the reformer 23. The burner 17 has a flame detecting part 116 of detecting flame. A cooling air supply part 13 is provided between the raw material supply part 21 and the reformer 23 to supply air to the interior of the reformer 23 , and a temperature detecting part 114 is provided on the reformer 23 to detect a temperature of a reforming catalyst.

Reformed gas conveyed fromthe reformer 23 is conveyed to a shifter 18 filled with a platinum shifting catalyst. Shifted gas from the shifter 18 is conveyed to a CO oxidation part 19 filled with a CO oxidation catalyst and is conveyed to a fuel cell 110 from the CO oxidation part 19 as hydrogen-rich generated gas being 10 ppm or less in CO concentration. A CO oxidation air supply part 112 is provided on the CO oxidation part 19 to supply air for CO oxidation. A switching valve 115 is provided on the path between the CO oxidation part 19 and the fuel cell 110, and the switching valve 115 mixes the generated gas from the CO oxidation part 19 with fuel from the fuel supply part 15 and supplies the generated gas to the burner 17.

The raw material and fuel supplied from the raw material supply part 21 and the fuel supply part 15 are gaseous hydrocarbon fuel including natural gas (town gas) and LPG or liquid hydrocarbon fuel including gasoline, kerosene, and methanol. Although a vaporization part is necessary when liquid fuel is used, it is possible to configure the vaporization part using conductive heat around the reformer 23 and the burner 17 and sensible heat in combustion exhaust gas.

Further, as to the raw material supply part 21, a water supply part 22, the fuel supply part 15, the air supply part 16, the CO oxidation air supply part 112, and the cooling air supply part 13, the flow rates are adjusted by a method of using a pump and a fan to control the operations and amethod of setting a flow rate regulator such as a valve on the downstream side of a pump and a fan. In this explanation, these pumps, fans and flowrate regulators are included in the supply parts.

Further, as the temperature detecting part 114, a thermocouple, a high-temperature thermistor, and so on can be used. An amount of air supply can be controlled by the air supply part 16 according to a temperature detected by the temperature detecting part 114.

Furthermore, the flame detecting part 116 can use amethodof setting an electrode in flame, applying voltage , and detecting generated ion current, a method of setting a thermocouple in flame and detecting the temperature of the flame , and a method of detecting infrared radiation, visible radiation, and ultraviolet radiation from flame. Additionally, the arrows of Figure 4 indicate the directions of flows of a rawmaterial substance, a reaction substance, a fuel material and so on.

The following will discuss operations from the working condition to the stop of the hydrogen generating device.

When the device is operated, a raw material from the raw material supply part 21 and water from the water supply part 22 are supplied to the reformer 23. The reformer 23 has a high temperature because of heat from the adj acent burner 17, reforming reaction occurs on a reforming catalyst, and reformed gas from the reformer 23 is supplied to the shifter 18. Since the shifting catalyst of the shifter 18 is increased in temperature by reformed gas, shifting reaction occurs and shifted gas is supplied to the CO oxidation part 19 from the shifter 18. In the CO oxidation part 8, air from the CO oxidation air supply part 112 and the shifted gas are mixed and are supplied to the CO oxidation catalyst, and a CO concentration is reduced to 10 ppm or less due to CO oxidation reaction, so that hydrogen-rich generated gas is generated. And then, the generated gas is conveyed to the fuel cell 110 to generate electric power.

When the operation is stopped, the switching valve 115 conveys gas from the CO oxidation part 19 to the burner 17, and at the same time, supply of a raw material and fuel is stopped by the raw material supply part 21 and the fuel supply part 15. At this point, water from the water supply part 22 and air from the CO oxidation air supply part 112 are supplied as in the operating condition.

Immediately after the operation is stopped, hydrogen and a hydrocarbon material of combustible gas exist in the reformer 23, the shifter 18, the CO oxidation part 19, and pipes between the parts, that is, in the hydrogen generating device. Water supplied from the water supply part 22 is evaporated in the reformer 23 having a high temperature, and combustible gas existing inside is pressed out to the burner 17 by water vapor and is burned by the burner 17. Further, supply of air from the CO oxidation air supply part 112 is continued, so that CO and hydrogen of combustible gas, which is pressed out by water vapor and passes through the CO oxidation part 19, is subjected to oxidation reaction by a CO oxidation catalyst. Namely, hydrogen in the hydrogen generating device is somewhat consumed by air from the CO oxidation air supply part 112, thereby shortening time for consuming combustible gas in the hydrogen generating device. Furthermore, nitrogen contained in air from the CO oxidation air supply part 112 lowers the dew point in gas, it is possible to prevent blockage on paths and corrosion on pipes that are caused by condensation, which occurs on a place of low temperature in the hydrogen generating device, and it is further possible to prevent deterioration caused by water of the CO oxidation catalyst. Additionally, even if the volume of water vapor is decreased by condensation and combustible gas cannot be pressed out, the combustible gas can be pressed out by nitrogen. Here, when the CO oxidation catalyst is exposed in water for a long time, catalytic activity may decrease due to influence of exfoliation of the catalyst and carbonate generated by CO₂ contained in gas.

When water supply from the water supply part 22 continues, combustible gas in the hydrogen generating device is all supplied to the burner 17 by water vapor, and flame is extinguished. Since flame is extinguished, the reformer 23 is not heated any longer. Water is supplied and the reformer 23 thus decreases in temperature.

In this case, when an amount of fuel supplied from the fuel supply part 15 is gradually reduced and the supply is stopped at the stop of the operation, even if gas containing combustible gas pressed by the burner 17 somewhat varies in flow rate immediately after water is supplied from the water supply part 22, albeit small, flame is formed by fuel from the fuel supply part 15. Thus, flame is less likely to be extinguished. Further, when an amount of a raw material supplied from the raw material supply part 21 is gradually reduced and the supply is stopped at the stop of the operation, the reformer 23 undergoes reforming reaction, which is endothermic reaction, according to an amount of a rawmaterial, thereby speeding up decrease in temperature of the reformer 23.

Further, when the flame detecting part 116 detects that flame is extinguished and when an amount of air from the air supply part 16 is increased, it is possible to speed up decrease in temperature of the reformer 23. Moreover, even if flame is extinguished for some reasons while combustible gas in the hydrogen generating device is conveyed to the burner 17, combustible gas supplied to the burner 17 after extinguishment is diluted by increasing an amount of air supply and the gas can be safely discharged as gas falling out of a combustible range.

Subsequently, when the temperature detecting part 114 detects that the temperature of the reformer 23 decreases to a temperature where Ru contained in the reforming catalyst becomes RuO₄ by making contact with air and does not volatilize , water supply from the water supply part 22 is stopped, air is supplied from the cooling air supply part 13, and the inside of the hydrogen generating device is cooled by air. If RuO₄ is generated and is volatilized, the amount of Ru in the reforming catalyst is reduced by the volatilization and catalytic activity is deteriorated. By cooling with air instead of cooling with water vapor, it is possible to minimize condensation on a low-temperature part that is likely to occur due to continued supply of water vapor. Moreover, it is possible to prevent blockage and corrosion caused by condensed water on pipes, degradation in characteristics due to leakage of water from a catalyst, and increased time of raising a catalyst temperature at the restart.

Further, when the flame detecting part 116 detects that flame is extinguished after a fixed time period elapses from the stop of the operation, the CO oxidation air supply part 112 increases an amount of air to supply. By doing so, it is possible to increase an amount of gas flow supplied to the burner 17 from the CO oxidation part 19 to lower the dew point, thereby further reducing the possibility of adverse effect such as blockage and corrosion on pipes caused by condensation. Here, the fixed time period after the operation is stopped indicates a time period when combustible gas in the hydrogen generating device is sufficiently conveyed to the burner 17.

In the case where air is supplied to the CO oxidation part 19 when combustible gas remains in the hydrogen generating device, the combustible gas and oxygen react in the presence of a catalyst. In the case where an amount of air from the CO oxidation air supply part 112 is as small as air supply during the operation of the hydrogen generating device, any problems do not arise.

However, when the amount of air is considerably increased, oxidation reaction instantly occurs with a large amount. Thus, explosion may occur in some conditions. Moreover, when combustible gas is not sufficiently conveyed to the burner 17 and flame exits, albeit small, after the fixed time period elapses after the operation is stopped, the flame is detected by the flame detectingpart 116. In this case, since combustible gas may remain in the hydrogen generating device, air from the CO oxidation air supply part 112 is increased for safety after extinguishment is detected and the fixed time period elapses after the operation is stopped.

Besides, as the shifting catalyst of the shifter 18, a metal catalyst and so on having Cu-Zn as a main component is generally used. The surface of the catalyst is increased in specific surface by oxidation resulting from air exposure and the catalytic activity is likely to deteriorate. For this reason, by using a catalyst containing at least one of noble metals including platinum, ruthenium, rhodium, and palladium which are resistant to air exposure, even if cooling is performed by air after combustible gas is pressed out by water vapor, the effect of the present invention can be sufficiently exercised without deteriorating the catalytic activity.

### (Embodiment 5)

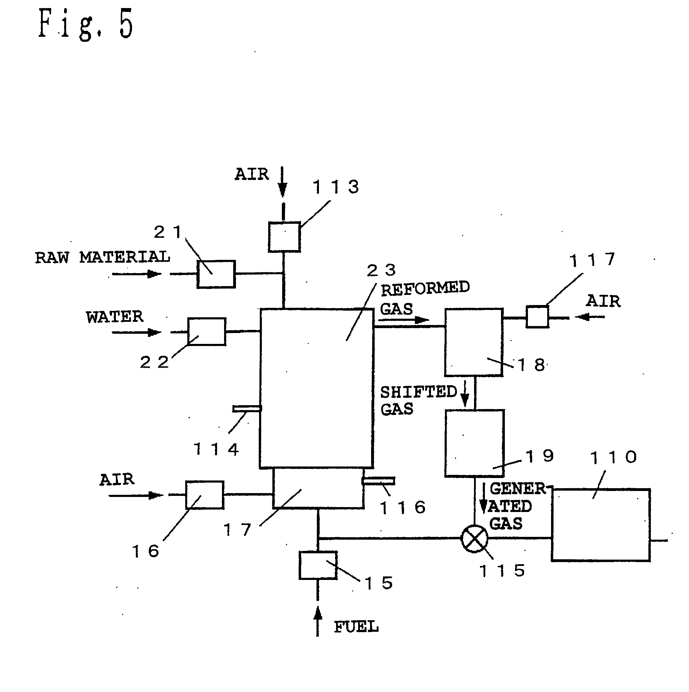

Figure 5 is a structural diagram showing a hydrogen generating device according to Embodiment 5 of the present invention. The CO oxidation air supply part 12 of Embodiment 4 is not provided and a shifting air supply part 17 is provided for supplying air to a shifter 18.

When the operation is stopped, as in the case of Embodiment 4, gas from a CO oxidation part 19 is conveyed to a burner 17 by the switching valve 115, and at the same time, supply of a raw material and fuel is stopped by a raw material supply part 21 and a fuel supply part 15. At this point, water is supplied from a water supply part 22 and air is supplied from the shifting air supply part 17.

With this operation, as in the case of Embodiment 4, combustible gas in the hydrogen generating device is pressed out by water vapor, and CO and hydrogen contained in combustible gas are subjected to oxidation reaction by air from the shifting air supply part 17, so that it is possible to shorten time for consuming combustible gas in the hydrogen generating device. Further, nitrogen contained in air from the shifting air supply part 17 lowers the dew point of gas. Hence, condensation can be prevented and combustible gas can be pressed out in the event of condensation.

In Embodiment 5, air is supplied from the shifter 18, which is provided on the upstream side of the CO oxidation part 19 of Embodiment 4. Hence, it is possible to lower the dew point of gas passing through the shifter 18. Therefore, it is possible to prevent condensation on a shifting catalyst as well as a CO oxidation catalyst. Thus, it is possible to prevent catalytic activity from being deteriorated by exposure of a shifting catalyst to water. Besides, byusing a catalyst containing at least one of noble metals including platinum, ruthenium, rhodium, and palladium which are resistant to air exposure as a shifting catalyst, the effect of the present invention can be sufficiently exercised without deteriorating the catalytic activity due to air supply.

Another embodiment of the present invention will be discussed in accordance with the accompanied drawings.

### (Embodiment 6)

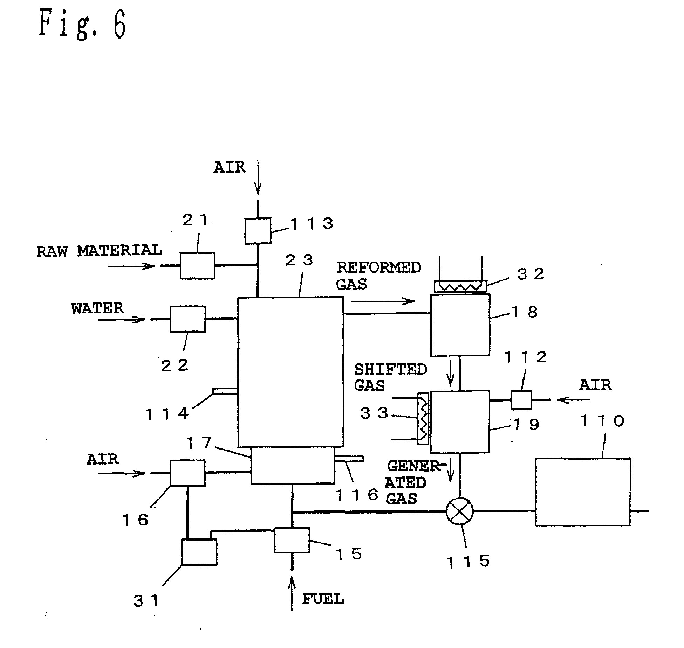

Figure 6 is a structural diagram showing a hydrogen generating device according to Embodiment 6 of the present invention. In Figure 6, the same constituent elements as those of Embodiment 6 are denoted by the same reference numerals and the description thereof is mostly omitted.

A shifter 18 comprises a heater A32 which heats a shifting catalyst and raises the temperature of the catalyst. Shifted gas from the shifter 18 is conveyed to a CO oxidation part 19 filled with a CO oxidation catalyst and is conveyed to a fuel cell 110 from the CO oxidation part 19 as hydrogen-rich generated gas being 10 ppm or less in CO concentration. The CO oxidation part 19 comprises a CO oxidation air supply part 112 which supplies air required for CO oxidation and a heater B33 which heats a CO oxidation catalyst and raises the temperature of the catalyst. A switching valve 115 is provided on a path between the CO oxidation part 19 and the fuel cell 110. The generated gas from the CO oxidation part 19 is mixed with fuel from the fuel supply part 15 and is also supplied to the burner 17. A control part 31 controls the operations of an air supply part 16 and the fuel supply part 15.

Further, as a temperature detecting part 114, a thermocouple, a thermistor, and so on can be used. Supply of predetermined fuel from the fuel supply part 15 to the burner 17 can be controlled according to a temperature detected by the temperature detecting part 114.

Moreover, an amount of air supplied to the burner 17 from the air supply part 16 can be controlled according to an amount of water supplied by a water supply part 22.

Additionally, the arrows of Figure 6 indicate the directions of flows of a rawmaterial substance, a reaction substance, a fuel material and so on.

The following will discuss operations from the working condition to the stop of the hydrogen generating device.

When the device is operated, a raw material from the raw material supply part 21 and water from the water supply part 22 are supplied to a reformer 23. The reformer 23 has a high temperature due to heat from the adj acent burner 17. Reforming reaction occurs on a reforming catalyst and reformed gas is supplied to the shifter 18. Since the shifting catalyst of the shifter 18 is increased in temperature by the reformed gas, the reformed gas is subjected to shifting reaction, and the gas is supplied to the CO oxidation part 19 as shifted gas. In the CO oxidation part 8, air from the CO oxidation air supply part 112 and the shifted gas are mixed and are supplied to the CO oxidation catalyst, and a CO concentration is reduced to 10 ppm or less by CO oxidation reaction, so that hydrogen-rich generated gas is generated. And then, the generated gas is conveyed to the fuel cell 110 to generate electric power.

When the device is stopped, the switching valve 115 conveys generated gas from the CO oxidation part 19 to the burner 17 , and at the same time, supply of a rawmaterial is stopped by the raw material supply part 21. A control part 31 controls the fuel supply part 15 such that fuel supplied to the burner 17 from the fuel supply part 15 is stopped after a predetermined time period. At this point, water supply from the water supply part 22 and air supply from the CO oxidation air supply part 112 are continued as in the operating condition.

Immediately after the operation is stopped, hydrogen and a hydrocarbon material of combustible gas X exist in the reformer 23, the shifter 18, the CO oxidation part 19, and pipes between the parts, that is, in the hydrogen generating device. Water supplied from the water supply part 22 is evaporated in the reformer 23 having a high temperature, and combustible gas X existing inside the device is pressed out to the burner 17 by water vapor and is burned by the burner 17. Since the combustible gas X pressed out by the burner 17 contains a large amount of water vapor, the combustible gas X decreases in burning speed and the burner 17 may be extinguished. When fuel is supplied to the burner 17, the burning speed of the combustible gas X can be increased by the fuel, thereby preventing the burner 17 from being extinguished. Also, the concentration of water vapor increases with time in the combustible gas X pressed out by water vapor and the burner 17 is likely to be extinguished. However, since fuel is supplied to the burner 7 for a predetermined time period, even when the concentration of water vapor increases in the combustible gas X, extinguishment can be prevented. Thus, it is possible to continue combustion until the combustible gas X goes out of a combustible range, and then, the fuel supply part 15 is stopped. Combustible gas X within the combustible range is not discharged to the outside by extinguishment, so that safety can be secured. Here, the predetermined time period indicates a time period when the combustible gas X in the hydrogen generating device is sufficiently conveyed to the burner 17.

Besides, after the operation is stopped, the combustible gas X in the hydrogen generating device is pressed out to the burner 17 and is burned when water supplied from the water supply part 22 is evaporated in the reformer 23 having a high temperature. At this point, when the reformer 23 is smaller in heat storage amount, water vapor cannot be generated sufficiently and the reformer 23 may decrease in temperature. Thus, the temperature of the reformer 23 is detected by the temperature detecting part 114 and the fuel supply part 15 is controlled so as to maintain a predetermined temperature for generating water vapor, so that the combustible gas X can be positively conveyed.

Further, when the operation is stopped, water supplied from the water supply part 22 becomes water vapor with increased volume and presses out the combustible gas X in the hydrogen generating device. Thus, the combustible gas X is supplied to the burner 7 according to the increased volume of water vapor immediately after water is supplied. As to the combustible gas X which is pressed out to the burner 7 and is supplied, the flow rate is computed by an amount of water vapor, that is, an amount of water supplied from the water supply part 22, and then, the amount of air supplied for combustion is previously controlled to a required amount. Hence, it is possible to prevent combustion failure resulting from the lack of combustion air, thereby maintaining a preferred burning condition.

Moreover, when the operation is stopped, by energizing the heater A32 on the shifter 18 to generate heat, a shifting catalyst is heated and condensation of water vapor is prevented on the shifting catalyst. Thus, it is possible to prevent degradation caused by the shifting catalyst exfoliated by condensed water, thereby increasing the life of the hydrogen generating device.

Additionally, when the operation is stopped, by energizing the heater B33 on the CO oxidation part 19 to generate heat, a CO oxidation catalyst is heated and condensation of water vapor is prevented on the CO oxidation catalyst. Thus, it is possible to prevent degradation caused by the CO oxidation catalyst exfoliated by condensed water, thereby increasing the life of the hydrogen generating device. Besides, although the heater A32 and the heater B33 perform heating from the outside of reactors, the following configuration is also applicable: the heaters are provided in the flow paths of the reactors and generated gas is directly heated to raise the temperatures of the shifting catalyst and the CO oxidation catalyst.

Moreover, a Cu-Zn catalyst is generally used as the shifting catalyst of the shifter 18. By using a platinum catalyst resistant to air exposure, the effect of the present invention can be sufficiently exercised.

### Industrial Applicability

As described above, the present invention can readily generate inert gas at installation place of a device. Thus, as compared with a conventional method of performing replacement in the device with inert gas such as nitrogen, it is possible to eliminate the need for a cylinder of nitrogen and so on and eliminate limit imposed by supply of inert gas on the start/stop of the device.

Further, a hydrogen generating part can be heated by combustion gas of a catalyst combustion part, thereby shortening the start-up time of the device. As a result, it is possible to remarkably reduce the cost of the operations and to readily achieve ordinary start/stop of the device.

Moreover, according to the present invention, in a method of stopping the hydrogen generating device, when the operation is stopped, consumption of combustible gas is accelerated by air of a CO oxidation part, and at the same time, the dew point temperature of gas is lowered to prevent blockage and corrosion on pipes that result from condensation and to prevent reduction in CO oxidation catalytic activity. Even in the event of condensation, combustible gas is pressed out by nitrogen in air.

Furthermore, when air is supplied to a shifter from a shifting air supply part, the dew point of gas is lowered from the higher upstream side to prevent reduction in activity of a shifting catalyst.

Moreover, when combustion is performed by supplying combustible gas from the hydrogen generating device (CO oxidation part) to the burner 17, combustible gas can be processed with safety.

Further, a cooling air supply part is provided for supplying cooling air to a reformer, and a temperature detecting part is provided for detecting a temperature of a reforming catalyst. When the reforming catalyst has a lower temperature than a predetermined value, in the case where water supply from a water supply part is stopped and air is supplied from the cooling air supply part, it is possible to minimize water supply, thereby preventing blockage and corrosion on pipes that are caused by condensation, degradation in characteristics due to leakage of water from the catalyst, and increased time of raising a catalyst temperature at the restart.

Additionally, a flame detecting part is provided for detecting the presence of flame on a burner. When a combustion detecting part judges that flame is extinguished, in the case where an amount of air supplied from the air supply part is increased, cooling is accelerated on the reformer, and combustible gas supplied to the burner after extinguishment is diluted and is safely discharged as gas falling out of a combustible range.

Further, in the case where the combustion detecting part judges that flame is extinguished and an amount of air from a CO oxidation air supply part is increased when a fixed time period elapses after the operation is stopped, the dew point of gas flowing into the burner from the CO oxidation part is lowered and it is possible to reduce the possibility of the occurrence of adverse effect including blockage and corrosion on pipes that are caused by condensation.

Besides, when a catalyst containing at least one of platinum, ruthenium, rhodium, and palladium is used as the shifting catalyst filling the shifter, activity is not reduced even in the case of air exposure in air cooling performed when the operation is stopped, thereby achieving a hydrogen generating device with stable characteristics.

As described above, according to the present invention, in a method of stopping the hydrogen generating device, predetermined fuel is supplied to the burner when the operation is stopped. Thus, flame is not extinguished until combustible gas goes out of the combustion range and thus burning can be performed with safety.

Additionally, when an amount of fuel supplied to the burner is controlled, it is possible to maintain the temperature of the reformer at a predetermined temperature permitting generation of water vapor, thereby positively conveying combustible gas in the hydrogen generating device.

Further, when an amount of supplied combustion air is previously controlled according to an amount of water from the water supply part, it is possible to supply proper combustion air to the burner, thereby maintaining a preferred burning condition.

Moreover, heaters are provided on the shifter and the CO oxidation part, respectively. In the case where the shifting catalyst and the CO oxidation catalyst are heated when the operation is stopped, it is possible to prevent condensation of water vapor on the catalysts, thereby preventing degradation caused by exfoliation on the catalyst.

Furthermore, in the case where a platinum catalyst is used as the shifting catalyst filling the shifter, since combustible gas is conveyed by supplying air when the operation is stopped, even when the shifting catalyst is exposed to an atmosphere of oxidation, the catalytic activity is more resistant to deterioration.

## Claims

1. A hydrogen generating device comprising a raw material supply part of supplying a raw material for generating hydrogen, a hydrogen generating part of generating generated gas by reacting the raw material and water, a water supply part of supplying water to the hydrogen generating part, a raw material supply path connecting the raw material supply part and the hydrogen generating part, a bypass path for the raw material supply path, a path switching part of switching the raw material supply path and the bypass path, a combustion part which is provided on the bypass path and burns the raw material, an air supply part of supplying air to the combustion part and/or the hydrogen generating part, a combustion gas path of supplying combustion gas of the combustion part to the hydrogen generating part, and a control part of operating the path switching part to replace the inside of the hydrogen generating part with combustion gas obtained from the combustion part.

2. The hydrogen generating device according to claim 1, wherein the combustion part has catalytic combustion.

3. The hydrogen generating device according to claim 1 or 2, wherein when the hydrogen generating device is started, the control part controls in such manner that a raw material is supplied to the combustion part the combustion part operates, the raw material burns, the combustion gas is supplied to the hydrogen generating device, and the inside of the hydrogen generating part is replaced with the combustion gas, and then, the control part operates the path switching part to start supply of a raw material to the hydrogen generating part.

4. The hydrogen generating device according to claim 3, wherein the device further comprises oxygen concentration detecting means of detecting a concentration of oxygen in gas outputted from the hydrogen generating part, and the control part operates the path switching part to start supply of raw material to the hydrogen generating part when a concentration detected by the oxygen concentration detecting means is equal to or smaller than a set value.

5. The hydrogen generating device according to claim 3, wherein the device further comprises temperature detecting means of detecting a temperature of gas outputted from the hydrogen generating device, and the control part operates the path switching part to start supply of raw material to the hydrogen generating part when a temperature detected by the temperature detecting means is equal to or larger than a set value.

6. The hydrogen generating device according to claim 1 or 2, wherein when the hydrogen generating device is stopped, the control part operates the path switching part to supply a raw material to the combustion part, operates the combustion part to burn the raw material, supplies combustion gas to the hydrogen generating part, and replaces the inside of the hydrogen generating part with the combustion gas.

7. The hydrogen generating device according to claim 6, wherein the device further comprises oxygen concentration detecting means of detecting a concentration of oxygen in gas outputted from the hydrogen generating part, and the control part stops supply of raw material when a concentration detected by the oxygen concentration detecting means is equal to or larger than a set value.

8. The hydrogen generating device according to claim 7, wherein after supply of the raw material is stopped, air is supplied from the air supply part.

9. The hydrogen generating device according to claim 1 or 2, wherein during combustion, the combustion part is supplied with an amount of air substantially 1 to 1.3 times as large as a required amount for complete combustion of a raw material.

10. The hydrogen generating device according to claim 1 or 2, wherein the hydrogen generating part includes at least a reformer of reacting a raw material and water and a burner of supplying heat to the reformer by combustion, and replaced gas in the hydrogen generating part is burned by the burner to generate heat.

11. The hydrogen generating device according to any one of claims 3 to 5, wherein the hydrogen generating part includes at leasta reformer of reactinga rawmaterial and water and a burner of supplying heat to the reformer, and the reformer is heated by the burner in addition to heat of combustion gas from the catalyst combustion part.

12. The hydrogen generating device according to any one of claims 1 to 11, wherein the hydrogen generating part includes a shifter, and a shifting catalyst filled in the shifter contains at least one of platinum, ruthenium, rhodium, and palladium.

13. Ahydrogen generating device , wherein the device comprises a raw material supply part of supplying a hydrocarbon rawmaterial, a water supply part of supplying water, a reformer filled with a reforming catalyst, a burner of heating the reformer, a fuel supply part of supplying combustible fuel to the burner, an air supply part of supplying combustion air to the burner, a shifter which has reformed gas flowing from the reformer and has a shifting catalyst therein, a CO oxidation part which has shifted gas flowing from the shifter and has a CO oxidation catalyst therein, and at least one of a shifting air supply part of supplying air to the shifter and a CO oxidation air supply part of supplying air for CO oxidation to the CO oxidation part, and
when an operation is stopped, supply of a raw material from the raw material supply part and supply of fuel from the fuel supply part are stopped, water from the water supply part is supplied, and at least one of air from the shifting air supply part or air from the CO oxidation air supply part is supplied.

14. The hydrogen generating device according to claim 13, wherein when an operation is stopped, the supply is stoppedwhile fuel from the fuel supplypart is gradually reduced or a raw material from the raw material supply part is gradually reduced.

15. The hydrogen generating device according to claim 13 or 14, wherein the device further comprises a fuel cell of supplying generated gas from the CO oxidation part, and generated gas supplied to the fuel cell at the stop of an operation is mixed with fuel from the fuel supply part and is supplied to the burner.

16. The hydrogen generating device according to any one of claims 13 to 15, wherein the device comprises a cooling air supply part of supplying cooling air to the reformer, and a temperature detecting part of detecting a temperature of the reforming catalyst, and
when an operation is stopped, in the case where a temperature of the reforming catalyst is below a predetermined value, supply of water from the water supply part is stopped and air is supplied from the cooling air supply part.

17. The hydrogen generating device according to any one of claims 13 to 16, wherein the device further comprises a flame detecting part of detecting the presence of flame of the burner, and after an operation is stopped, when a combustion detecting part judges that flame is extinguished, an amount of air from the air supply part is increased.

18. The hydrogen generating device according to any one of claims 13 to 17, wherein the device further comprises a flame detecting part of detecting the presence of flame of the burner, and after an operation is stopped, when a combustion detecting part judges that flame is extinguished and a fixed time period elapses from the stop of the operation, at least one of the shifting air supply part and the CO oxidation air supply part is increased in air amount.

19. The hydrogen generating device according to claim 15, wherein when a predetermined time period elapses after the raw material from the raw material supply part is stopped, fuel from the fuel supply part is stopped.

20. The hydrogen generating device according to claim 15, wherein the device further comprises a temperature detecting part of detecting a temperature of the reformer, and fuel from the fuel supply part is controlled so as to set a value of the temperature detecting part at a predetermined temperature.

21. The hydrogen generating device according to claim 15, wherein an amount of air supplied to the burner from the air supply part is controlled according to an amount of water supplied from the water supply part.

22. The hydrogen generating device according to any one of claims 13 to 21, wherein the CO oxidation part further comprises a heater of heating the CO oxidation catalyst and the heater increases a temperature of the CO oxidation part when an operation is stopped.

23. The hydrogen generating device according to any one of claims 13 to 21, wherein the device further comprises a heater of heating the shifting catalyst of the shifter and the heater increases a temperature of the shifter when an operation is stopped.

24. The hydrogen generating device according to any one of claims 13 to 23, wherein the shifting catalyst contains at least one of platinum, ruthenium, rhodium, and palladium.
